# EUROPEAN PATENT APPLICATION

(11) **EP 4 506 591 A1**
(43) Date of publication of application: **12.02.2025**
(21) Application number: 22936422.9
(22) Date of filing: 20.12.2022
(51) Int. Cl.: F16H 57/04, F16N 33/00

(54) **EQUIPMENT AND METHOD FOR OIL CHANGE IN AUTOMATIC GEARBOXES**

(30) Priority: 05.04.2022 ES 202230562 U; 25.10.2022 ES 202231763 U
(71) Applicant: Micrauto, S.L., 08430 La Torreta (Barcelona) (ES)
(72) Inventor: CID RAMON, Jorge, 08540 CENTELLES (BARCELONA) (ES)
(74) Representative: Espiell Gomez, Ignacio
(86) International application number: PCT/ES2022/070819
(87) International publication number: WO 2023/194634

(57) **Abstract**

Automatic gearbox oil change equipment comprising a fluid drive machine (10) with a drive system (11) and flow controls (12) and pressure controls (13); an oil supply tube (14) with a connector (15) where adapters are installed that allow the machine to be connected (10) to the box (2) and new oil to be injected from a tank (6) into the box (2) through the suction inlet (5); and a collecting receptacle (16) in the form of a bucket. Automatic gearbox oil change method comprising the following steps: remove the crankcase cover (3) of the gearbox (2), extract the old filter (4) from the gearbox (2), connect the lubricant supply tube (14) of a machine (10) to the suction inlet (5) using the connector (15), either at the inlet of the filter (4) once it has been replaced by a new one (4') (Figure 4), or by inserting the tube (14) with connector (15) into said inlet in the conduit from which the used filter (4) has been removed, and activate the lubricant supply of the machine (10) until the shade of the lubricant coming out of the gearbox (2) is the color of the new lubricant.

## Description

### OBJECT OF THE INVENTION

The invention, as expressed in the statement of this descriptive report, refers to equipment and a method for oil change of automatic gearboxes that provides, to the function to which it is intended, advantages and characteristics, which are described in detail below.

The object of the present invention falls on equipment which, specifically applicable for vehicles with automatic gearboxes which have a detachable crankcase, presenting the advantage that it allows the simplification of the process of replacing the used oil of this box with new oil without mixing and reducing the intervention time of the mechanic by avoiding the need to disassemble other components of the box other than the crankcase and filter. Also the subject of the invention is the method for oil change of automatic gearboxes.

### FIELD OF APPLICATION OF THE INVENTION

The scope of application of this invention falls within the industry sector dedicated to the manufacture of appliances, machines, tools and accessories for automotive workshops, focusing particularly on the field of oil change equipment.

### BACKGROUND OF THE INVENTION

There are currently two methods for replacing the oil of automatic gearboxes.
- Without a machine, it is emptied by gravity taking off the cap from the crankcase, the crankcase is dismounted and the filter is replaced, the crankcase is mounted again and is filled up to the level. However, in this case the oil substitution is only partial.
- Replacement with a pumping machine, with the current equipment it is necessary to disassemble elements and connections from the outside to "all" the gearboxes to install an input and output adapter to connect the tubes to inject new oil and extract the used oil.

This system, in addition to the time that has to be invested in the disassembly of the parts, has the drawback that inevitably a part of the used oil is mixed with the new oil.

This system is essential in automatic gearboxes that do not have a detachable crankcase. However, at least in the boxes that have detachable crankcases, it would be desirable to have a system that allows to avoid the aforementioned inconveniences of having to disassemble external parts of the box, since the workshop hours have a high economic cost for users, and that the new oil that is replaced is mixed with part of the used oil, since this loses part of the quality of the oil, which is why it has to be changed periodically, so the useful life of the oil is shortened and, consequently, it shortens the time in which this change needs to be made again.

The aim of the present invention is, therefore, to provide new equipment to be able to carry out this replacement in a more efficient and practical way in automatic gearboxes with detachable crankcases.

### EXPLANATION OF THE INVENTION

The equipment for oil change of automatic gearboxes that the invention proposes is configured as the ideal solution to the objective indicated above, the characterizing details that make it possible and that distinguish it being conveniently included in the final claims that accompany this description.

Specifically, what the invention proposes, as has been pointed out above, is equipment specifically applicable for vehicles with automatic gearboxes that have a detachable lid casing, which, thanks to its configuration and operating system connected through the suction inlet of the pump or the filter inlet, provides the advantage of simplifying the process of replacing the used oil with a new oil, significantly reducing the intervention time of the mechanic by avoiding the need to disassemble other components of the box except this cap of the crankcase and the filter to take advantage and replace it with a new one. The invention also proposes a new method for oil change of automatic gearboxes.

The equipment, applicable to gearboxes that have a detachable lid housing, being the filter installed inside the box between the mechanics and the cap of the crankcase, provides the advantage that an improvement in the quality of the operation is achieved since, unlike current systems, in addition to being easier to perform, it also reduces, or even avoids, the mixing of used oil with the new oil.

To do this, and more specifically, the equipment comprises:
- a fluid drive machine, equipped with a drive system and flow and pressure controls,
- an oil supply pipe with a connector that allows the machine to be connected to the gearbox so that the system injects new oil into it through the filter suction inlet simply after dismounting the crankcase cover directly through this filter, preferably after replacing it with a new one, or removing the filter and injecting the new oil directly connected to the gearbox in both cases using a specific adapter; and
- a collector receptacle in the form of a cuvette or tray that can be placed under the gearbox and collects the used oil that drips from it by gravity, and that is equipped with a drain duct to be able to lead it to a recovery container.

It is important to note that the cited oil supply tube connector of the machine in the invention, although it may consist of a specific connector or have a specific adapter adaptable to the suction inlet of the pump of each gearbox model provided for each type of filter, in a preferred embodiment is a connector that is already adapted to the filter inlet, so that the new oil is injected through the new filter installed in the suction duct, since the filter inlet, unlike the suction inlet of the pump, is usually standardized, making the manufacture of the machine more economical, by avoiding having a specific connector of adapter for each gearbox model.

In any case, the drive system is preferably a 220V electric pump or a pneumatic system (compressed air).

As noted above, the equipment includes an integrated gravity oil recovery vessel which is an advantage, since none of the equipment currently existing in the market for the change of gearbox oil has it installed and that is essential to be able to work with controlled oil waste. Currently, other equipment than that normally used for motor oils is used to perform this function.

The equipment which is the subject-matter of the invention also has the capacity that, if desired, can also be worked like the current equipment in the hydraulic process of injecting new oil and recovering the old oil with connecting tubes by disassembling components from the gearbox, for example, to use it in gearboxes without detachable crankcases.

The main difference of the equipment of the invention is that it can supply the new liquid through the suction duct of the gearbox where the filter is normally installed, which may or may not be placed in there, and recover the used liquid that drips out of the box due to gravity in the form of "rain" into the bucket that at the same time channels the used oil into a recovery container.

With all this, the equipment of the invention avoids the need to disassemble the external connections to install the new and used oil tubes, as it simply needs the supply conduit to be connected to the filter suction inlet.

The advantages of the operating system of the equipment of the invention to replace the oil are multiple:
- It eliminates contact between used and new oils.
- It simplifies the process since the mechanic only has to disassemble the crankcase, change the filter, connect the machine with the standard connector, start the vehicle and wait for the clean oil to come out, disassemble the connector, put the crankcase cap on and fill it level with a tube of the same machine.

It is therefore a piece of equipment that allows the new oil to be injected directly through the suction of the box and the recovery of the used oil by gravity directly into a bucket.

### DESCRIPTION OF THE DRAWINGS

To complement the description that is being made and in order to help gain a better understanding of the characteristics of the invention, the present descriptive report is accompanied, as an integral part, by a set of plans in which, with an illustrative and non-limiting character, the following has been represented:
Figure 1.- Shows a schematic side elevation view of a vehicle with an automatic gearbox equipped with a detachable crankcase raised on a schematic representation of the oil change equipment object of the invention, showing its general configuration and main parts;
Figures 2, 3 and 4.- Show respective schematic views of the representation of the successive phases of extraction of the crankcase cap and extraction and replacement of the gearbox filter prior to the connection of the equipment;
Figure number 5.- Shows a schematic view of the representation of the gearbox once connected to the equipment of the invention where, appearing are the parts and elements it comprises for the oil change in the option where the oil injection is carried out with the new built-in filter; and
Figure 6.- It shows a schematic view similar to that shown in Figure 5, of the representation of the gearbox once connected to the equipment of the invention, showing the parts and elements that it comprises to carry out the oil change in the option in which the oil injection is carried out having extracted the filter.

### PREFERENTIAL REALIZATION OF THE INVENTION

In view of the aforementioned figures, and in accordance with the numbering adopted, one can observe in them a non-limiting embodiment of the equipment for changing the oil in automatic gearboxes of the invention, which comprises what is described in detail below.

For this, and more specifically, the equipment (1) of the invention, which is applicable to automatic transmission boxes (2) which have a crankcase (3) with a detachable cover and a filter (4) installed inside the box (2) next to a suction inlet (5) between the mechanics in the box (2) and the crankcase cap (3), comprising, at least:
- a fluid drive machine (10), equipped with a drive system (11) connected to the respective flow controls (12) and pressure controls (13);
- an oil supply tube (14) with a connector (15) with which the machine (10) can be connected to the box (2) and new oil injected from a tank (6) into the box (2) through the suction inlet (5) after disassembling the cap from the crankcase (3); and
- a collecting receptacle (16) in the form of a bucket, suitable to place under the gearbox (2) and collect the used oil that due to gravity drips from it, and which, preferably, it is equipped with a drain duct (17) that allows the used oil to run into a recovery container (7).

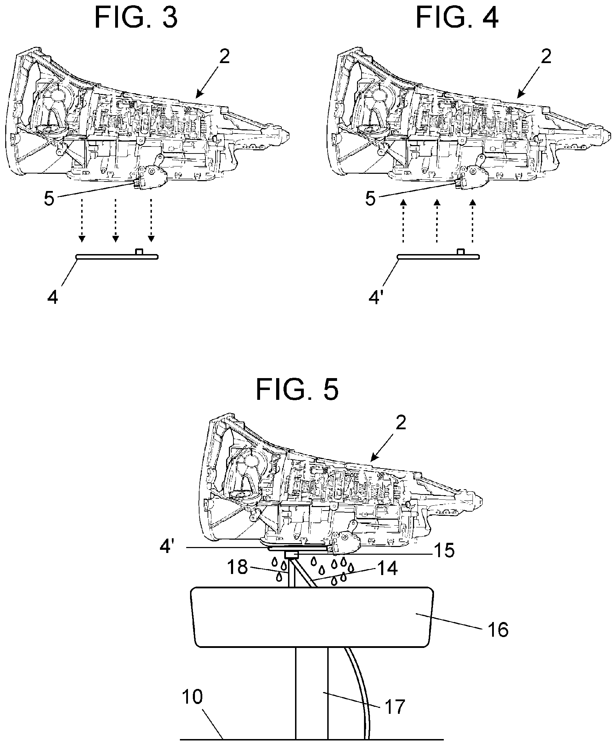

In one embodiment, the connector (15) is an unrepresented specific adapter suitable for attachment to the suction inlet of the filter built into the box (2), after the old filter (4) has been replaced by a new filter (4). (Figure 5).

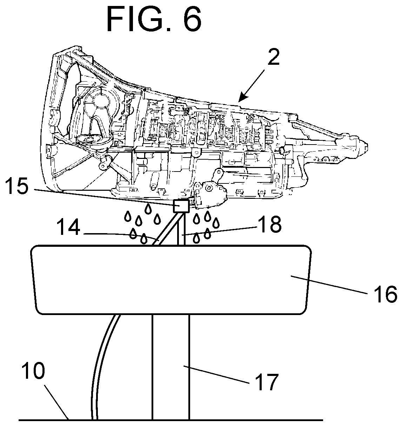

And, in an alternative embodiment, the connector (15) is a specific configuration element or incorporating a specific adapter (not represented) suitable for attachment to the suction inlet (5) of the gearbox (2) itself, once the used filter (4) has been removed (Figure 6).

In an embodiment, the drive system (11) is a 220V electric pump. And in another embodiment, the drive system (11) is a pneumatic system.

Preferably, the device (1) also includes a movable support (18) that allows the adapters to be positioned and fixed in a stable way (15) with the supply tube (14) that is connected to the machine (10). The adapters (15) are connected where the box (2) sucks in the oil and where the used filter (4) has been disassembled and the new filter (4') has already been placed in or not, supplying the new oil to the box (2) through this point.

The equipment (1) supplies the oil in a controlled manner both in pressure and flow through the aforementioned flow controls (11) and pressure controls (12).

In order to perform this supply correctly, the mechanic must start the engine and activate the gear lever by moving it from the P (Parking) position to N (Neutral), to R (Reverse) and D (Drive or Driving) position, activating all gears and returning to P and then stopping the engine.

Although it is not essential to follow exactly this order strictly, the engine must be started and the lever moved because during this maneuver the new oil enters the box (2) and the used oil falls into the collecting receptacle (16) that is located under the box (2).

Preferably, the machine (10) has a housing or platform (19) to incorporate both the new oil tank (6) and the used oil recovery container (7), so that everything is collected in the same compact item occupying minimum space.

The oil change method of automatic gearboxes which, applicable to self-shifting boxes (2) with a detachable cover (3) and a filter (4) installed inside the box (2) next to a suction inlet (5) between the mechanics of the box (2) and the crankcase cap (3), object of the invention comprises the following stages:
- remove the cover of the crankcase (3) from the gearbox (2)
- remove the old filter (4) from the gearbox (2)
- attach by means of the connector (15) of the lubricant supply tube (14) of a machine (10) to the suction inlet (5), either at the filter inlet (4) once replaced by a new one (4'), or by inserting the tube (14) with connector (15) into said inlet in the conduit from which the used filter (4) has been removed.
- activate the lubricant supply of the machine (10) until the hue of the lubricant descending from the gearbox (2) is the color of the new lubricant.

Preferably, before activating the lubricant supply of the machine (10), a dirty oil pan (16) is placed under the gearbox (2).

Preferably, after activating the lubricant supply of the machine (10), the vehicle is started with the position of the gear lever in P and the corresponding movements are performed on the lever according to the manufacturer protocol or standard protocol.

Preferably, before deactivating the lubricant supply of the machine (10), stop the vehicle.

Also preferably, after deactivating the lubricant supply to the machine (10), if applicable, proceed with the assembly of the new filter (4') and, in any case, with the subsequent assembly of the crankcase cover (3) of the automatic gearbox (2) and subsequently introduce more lubricant with the same machine (10) through the level screw of the box (2) until reaching the necessary level indicated in the manufacturer's maintenance instructions.

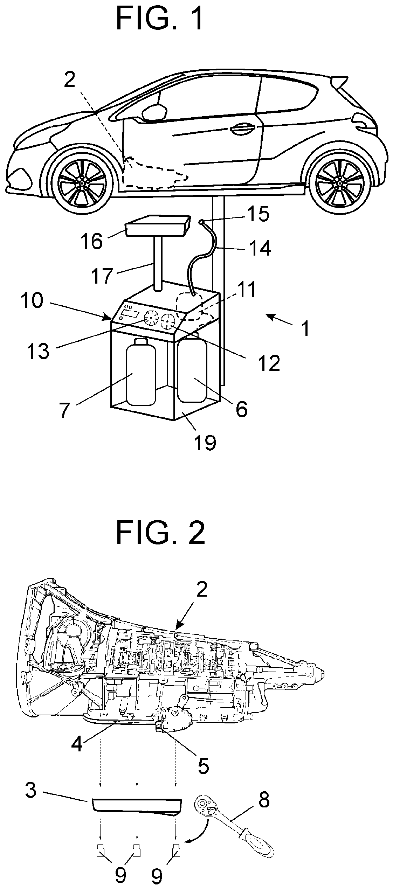

In the most preferred embodiment, the stages for using the equipment (1) of the invention are as follows:
- Once the car has been raised (Figure 1) and the gearbox has reached the temperature recommended by the manufacturer, locate the crankcase (3) of the gearbox (2) and the screw to drain the oil from the crankcase, then proceed to remove the crankcase cover (3) taking care that any traces of lubricant will fall out. Figure 2 shows a representation of this extraction of the crankcase cap (3) by using a tool (8) to unscrew the screws (9) that attach it to the box (2).
- Remove the old filter (4) and clean any shavings from the removed crankcase cover (3) with liquid, carefully degrease and clean or replace the magnets if it has them. Figure 3 shows this phase of extraction of the used filter (4).
- It is coupled by means of the connector (15) of the lubricant supply tube (14) of a machine (10) in the suction inlet (5), either in the filter inlet (4) once replaced by a new one (4') (figure 5), or by inserting the tube (14) with connector (15) in said inlet in the duct from which the used filter (4) has been removed (figure 6).
- Ensure that the dirty oil pan (16) is well placed under the gearbox (2).
- The lubricant supply of the machine is activated (10) by activating the drive system (11), preferably applying a stable pressure with a maximum of 1 bar and with a sufficient continuous and stable flow rate.
- The vehicle is started with the position of the gear lever in P and performing the corresponding movements on the lever according to the manufacturer protocol or standard protocol.
- During the process it is observed that the dirty oil falls from the bottom of the gear box (2). Figure 5 shows the dripping of dirty oil on the oil pan (16). The tone of the lubricant that comes out will be in principle dark, being dirty oil and then you will see that it is taking on the red tone of the new oil. It is at that moment that you have to stop the vehicle first and then stop the machine (10), preferably in this order.
- Proceed, if appropriate, with the installation of the new filter (4') and, in any case, with the subsequent installation of the crankcase cover (3) of the automatic transmission (2).
- More lubricant is inserted with the same machine (10) through the level screw of the box (2) until it reaches the necessary level indicated in the manufacturer's maintenance instructions.

Having sufficiently described the nature of the present invention, as well as the way to put it into practice, it is not considered necessary to make its explanation more extensive so that any expert in the field understands its scope and the advantages derived from it.

## Claims

1. Equipment for oil change of automatic gearboxes that, applicable to self-shifting boxes (2) with a detachable cover (3) and a filter (4) installed inside the box (2) next to a suction inlet (5) between the mechanics in the box (2) and the crankcase cap (3), it is **characterized by** comprising:
- a fluid drive machine (10), equipped with a drive system (11) and flow controls (12) and pressure controls (13);
- an oil supply tube (14) with a connector (15) where adapters are installed that allow connecting the machine (10) to the box (2) and injecting new oil from a tank (6) into the box (2) through the suction inlet (5) after removing the crankcase cover (3); and
- a collecting receptacle (16) in the shape of a bucket, suitable to place under the gearbox (2) and collect the used oil that due to gravity drips from it.

2. Equipment for oil change of automatic gearboxes, according to claim 1, **wherein the** connector (15) is suitable for attaching to the suction inlet of the filter incorporated in the box (2), once the old filter (4) has been replaced by a new filter (4').

3. Equipment for oil change of automatic gearboxes, according to claim 1, **wherein the** connector (15) is suitable for attaching to the suction inlet (5) of the gearbox (2) itself, once the used filter (4) has been removed.

4. Equipment for oil change of automatic gearboxes, according to any of the above claims, **characterized** because the drive system (11) of the machine (10) is a 220V electric pump.

5. Equipment for oil change of automatic gearboxes, according to any of claims 1 to 3, **characterized** because the drive system (11) of the machine (10) is a pneumatic system.

6. Equipment for oil change of automatic gearboxes, according to any of the above claims, **characterized in that** the collecting receptacle (16) is equipped with a drain duct (17) to run the used oil to a recovery container (7).

7. Equipment for oil change of automatic gearboxes, according to any of claims 1 to 6, **characterized in that** it comprises a movable support system (18) with adapters to stably position and fix the collection receptacle (16) under the gearbox (2) and connect the supply tube (14) with the connector (15) directly at the site where the box (2) sucks the oil and from where the used filter (4) will have been removed and replaced or not by a new one (4').

8. Equipment for oil change of automatic gearboxes, according to claims 1 to 7, **characterized** because the drive machine (10) has a housing or platform (19) to incorporate a tank (6) of the new oil and a recovery container (7) of the used oil.

9. Method for oil change of automatic gearboxes that, applicable to self-shifting boxes (2) with a detachable cover (3) and a filter (4) installed inside the box (2) next to a suction inlet (5) between the mechanics of the box (2) and the crankcase cap (3), **characterized by** comprising the following stages:
• remove the cover of the crankcase (3) from the gearbox (2)
• remove the old filter (4) from the gearbox (2)
• attach by means of the connector (15) of the lubricant supply tube (14) of a machine (10) to the suction inlet (5), either to the filter inlet (4) after replacement with a new one (4') (Figure 4), or inserting the tube (14) with connector (15) into that inlet in the conduit from which the used filter (4) has been removed.
• activate the lubricant supply of the machine (10) until the hue of the lubricant descending from the gearbox (2) is the color of the new lubricant.

10. Method for oil change of automatic gearboxes according to claim 9, **wherein** before activating the lubricant supply of the machine (10) an oil pan (16) for dirty oil is placed under the gearbox (2).

11. Method for oil change of automatic gearboxes according to any of claims 9 or 10, **characterized** because after activating the lubricant supply of the machine (10) the vehicle is started with the position of the shift lever in P and the corresponding movements are made on the lever according to the manufacturer protocol or standard protocol.

12. Method for oil change of automatic gearboxes according to claim 11, **wherein** before deactivating the lubricant supply of the machine (10), the vehicle is stopped.

13. Method for changing oil in automatic gearboxes according to any of claims 9 or 12, **wherein** after deactivating the lubricant supply to the machine (10), the new filter (4') is mounted, if applicable, and, in any case, the crankcase cover (3) of the automatic gearbox (2) is subsequently mounted and more lubricant is subsequently introduced with the same machine (10) through the level screw of the box (2) until reaching the necessary level indicated in the manufacturer's maintenance instructions.
